# EUROPÄISCHE PATENTSCHRIFT

(11) **EP 1 423 440 B1**
(45) Veröffentlichungstag und Bekanntmachung des Hinweises auf die Patenterteilung: **23.03.2005**
(21) Anmeldenummer: 02769972.7
(22) Anmeldetag: 12.08.2002
(51) Int. Cl.: C08F 8/00, C08K 5/00

(54) **VERFAHREN ZUR HERSTELLUNG EINER FORMBAREN MASSE UND DEREN VERWENDUNG ZUR HERSTELLUNG EMISSIONSARMER BODENBELÄGE**
METHOD FOR PRODUCTION OF A MOULDABLE MASS AND USE THEREOF FOR PRODUCTION OF LOW-EMISSION FLOOR COVERINGS
PROCEDE DE FABRICATION D'UNE MATIERE MOULABLE ET UTILISATION DANS LA FABRICATION DE REVETEMENTS DE SOLS A FAIBLES EMISSIONS

(30) Priorität: 13.08.2001 DE 10139738
(43) Veröffentlichungstag der Anmeldung: 02.06.2004
(73) Patentinhaber: Armstrong DLW AG, 74321 Bietigheim-Bissingen (DE)
(72) Erfinder: MAUK, Hanns-Jörg, 74395 Mundelsheim (DE); FISCHER, Bernd, 74385 Pleidelsheim (DE); STEFANI, Renate, 71739 Oberriexingen (DE)
(74) Vertreter: Müller-Boré & Partner Patentanwälte
(86) Internationale Anmeldenummer: PCT/EP2002/009018
(87) Internationale Veröffentlichungsnummer: WO 2003/016358

(56) Entgegenhaltungen:
- WO-A-01/42401
- WO-A-99/58602
- DD-A- 300 301
- US-A- 4 578 430
- US-A- 4 902 738
- US-A- 5 405 915
- US-A- 5 405 917
- US-A- 5 587 434
- US-A- 5 651 927

## Beschreibung

Die vorliegende Erfindung betrifft ein Verfahren zur Herstellung formbarer Massen auf Basis eines Polyolefins mit einer Dichte < 0,918 g/cm³ durch mindestens zwei zeitversetzte Vemetzungsreaktionen sowie die Verwendung derartiger Massen zur Herstellung von emissionsarmen Bodenbelägen mit ausgezeichneten Materialeigenschaften.

Elastomerbeläge auf Kautschuk-Basis gehören aufgrund ihrer Strapazierfähigkeit und vielfältigen Einsatzmöglichkeiten zu den Hochleistungsbodenbelägen. Die Vulkanisations- und Prozessadditive- bzw. -mittel neigen jedoch in unveränderter oder chemisch veränderter Form zum Emittieren aus dem Bodenbelag. In WO 97/47802 und WO 99/58602 wurden deshalb Bodenbeläge beschrieben, die im Wesentlichen keine geruchsbelästigenden und/oder gesundheitsbeeinträchtigenden Emissionen verursachen. Derartige Bodenbeläge basieren auf einem Polyolefin mit einer Dichte < 0,918 g/cm³ für das polymere Bindemittel. Im Zuge der weiteren Entwicklungsarbeit für emissionsarme Bodenbeläge hat sich gezeigt, dass die Verfahrensführung bei der Herstellung von derartigen Bodenbelägen einen wesentlichen Einfluss auf deren Materialeigenschaften aufweisen kann.

Somit liegt der vorliegenden Erfindung die Aufgabe zugrunde, ein neues Verfahren zur Herstellung von emissionsarmen Bodenbelägen auf Polyolefinbasis bereitzustellen, wodurch Bodenbeläge mit ausgezeichneten Materialeigenschaften und ansprechender Optik erhalten werden können.

Diese Aufgabe wird durch die in den Ansprüchen gekennzeichneten Ausführungsformen gelöst. Insbesondere wird ein Verfahren zur Herstellung einer formbaren Masse bereitgestellt, umfassend die Schritte:
(a) Compoundieren eines Gemisches, welches mindestens ein Polyolefin mit einer Dichte < 0,918 g/cm³, beispielsweise 0,86 bis 0,91 g/cm³, eine erste organische Peroxidverbindung, beispielsweise 2,5-Dimethyl-2,5-di-(t-butylperoxy)-hexan ("DHBP"), mit einer Zersetzungstemperatur T1, beispielsweise etwa ≥ 160°C, und ein erstes, bei einer Temperatur < T1 im wesentlichen stabiles Co-Vernetzungsmittel enthält, bei einer Temperatur < T1,
(b) Zuführen von Mineralöl, vorzugsweise paraffinisches Mineralöl mit möglichst wenigen ungesättigten Anteilen, beispielsweise SUNPAR® 150, zum Gemisch von Schritt (a), vorzugsweise in einer Menge von 2 bis 25 Gew.-%, bezogen auf die Menge des Polyolefins, und Erwärmen dieses Gemisches auf eine Temperatur T2, beispielsweise etwa 180°C, und
(c) Zuführen von mindestens einer zweiten organischen Peroxidverbindung, beispielsweise 1,1-Di-(t-butylperoxy)-3,3,5-trimethylcyclohexan, mit einer Zersetzungstemperatur T3 und einem zweiten, bei einer Temperatur < T3 im wesentlichen stabilen Co-Vemetzungsmittel zum Gemisch von Schritt (b) und Erwärmen des resultierenden Gemisches auf eine Temperatur ≥ T3, beispielsweise ≥ etwa 185°C, unter Erhalt der formbaren Masse,
wobei T1 < T2 < T3 ist.

Das in Schritt (a) eingesetzte Polyolefin kann ein Polyethylen mit sehr niedriger Dichte ("PE-VLD") oder ein Copolymer aus Ethylen mit mindestens einem weiteren Olefin, wie Propen, Buten oder Octen, und/oder ein Gemisch von mindestens zwei Ethylen-Copolymerisaten sein, wobei das Ethylen-Copolymerisat als Hauptpolymer ein Copolymerisat (i) mit einer Dichte von 0,88-0,91 g/cm³ und zur Steuerung der Rheologie und Elastizität ein Copolymerisat (ii) mit einer Dichte von 0,86-0,89 g/cm³ und einem MFI > 3 (bei 190°C; 2,16 kg) aufweist. Beispielsweise sind die Copolymerisate (i) und (ii) Copolymerisate von Ethylen mit Octen. Die Copolymerisate (i) und (ii) können beispielsweise im Gewichtsverhältnis von 4:1 bis 3:2 vorliegen. Ferner kann neben dem Polyolefin als weitere Komponente mindestens ein Pfropfcopolymer, vorzugsweise auf Basis eines HD-Polyethylens, vorliegen. Insbesondere kann das Pfropfcopolymer ein Maleinsäureanhydrid-gepfropftes HD-Polyethylen sein, wobei der Pfropfgrad vorzugsweise 1 bis 5 % beträgt. Der Anteil des Pfropfcopolymers beträgt beispielsweise 5 bis 25 Gew.-%, bezogen auf das Gesamtgewicht der in Schritt (a) eingesetzten Polymeranteile. Dementsprechend kann der Anteil des mindestens einen Polyolefins, welches neben dem Pfropfcopolymer den polymeren Anteil des Gemisches in Schritt (a) ausbildet, zwischen 75 bis 95 Gewichtsprozent, bezogen auf das Gesamtgewicht der polymeren Anteile liegen.

Die in Schritt (a) eingesetzte erste organische Peroxidverbindung umfasst nicht nur einzelne Verbindungen, sondern kann auch ein Gemisch von mindestens zwei derartigen Peroxidverbindungen umfassen, mit der Maßgabe, dass sowohl die einzelnen Verbindungen als auch ein derartiges Gemisch eine vorbestimmte Zersetzungstemperatur ≥ T1 aufweisen. Beispielsweise beträgt die Zersetzungstemperatur von in Schritt (a) eingesetztem DHBP ≥ 170 °C. Die erste organische Peroxidverbindung liegt vorzugsweise in einer Menge von 0,05 bis 2,0 Gew.-%, bezogen auf die Menge des Polyolefins, im zu compoundierenden Gemisch vor.

Das in Schritt (a) eingesetzte erste, bei einer Temperatur < T1 im wesentlichen stabile Co-Vemetzungsmittel ist vorzugsweise ausgewählt aus der Gruppe, bestehend aus Di- und Trimethacrylaten, beispielsweise 1,4-Butandioldimethacrylat("1,4-BDMA"), 1,3-Butandiol-dimethacrylat ("1,3-BDMA"), Triethylenglykoldimethacrylat ("TEDMA") und Trimethylolpropantrimethacrylat ("TRIM"), und Gemischen davon. Das Co-Vernetzungsmittel liegt vorzugsweise in einer Menge von 0,05 bis 4,0 Gew.-%, bezogen auf die Menge des Polyolefins, im zu compoundierenden Gemisch vor.

Das in Schritt (a) zu compoundierende Gemisch kann ferner übliche Verarbeitungshilfsmittel, wie innere/äußere Gleitmittel, beispielsweise aus der Gruppe der Wachse, beispielsweise Metallsalze; Antistatika, beispielsweise GMS; Antioxidantien, beispielsweise phenolgehinderte Amine, etc. enthalten. Diese Verarbeitungshilfsmittel werden in herkömmlichen Mengen, beispielsweise 1 bis 5 Gew.-%, bezogen auf die Polymeranteile, verwendet.

Das in Schritt (b) zu dem compoundierten Gemisch von Schritt (a) zugeführte Mineralöl sollte vorzugsweise aromatenarm sein, d.h. keinen aromatischen Rest bzw. Gruppe wie z.B. eine Phenylgruppe aufweisen, wobei vorzugsweise 2 bis 25 Gew.-%, bezogen auf die Menge des Polyolefins, zugegeben werden.

Die in Schritt (c) zugeführte zweite organische Peroxidverbindung umfasst nicht nur einzelne Verbindungen, sondern kann auch ein Gemisch von mindestens zwei derartiger Peroxidverbindungen umfassen, mit der Maßgabe, dass sowohl die einzelnen Verbindungen als auch das Gemisch eine vorbestimmte Zersetzungstemperatur ≥ T3 aufweist. Die zweite organische Peroxidverbindung wird vorzugsweise in einer Menge von 0,05 bis 2,0 Gewichtsprozent, bezogen auf die Menge des Polyolefins, zugeführt.

Das in Schritt (c) zugeführte zweite, bei einer Temperatur < T3 im wesentlichen stabile Co-Vernetzungsmittel kann beispielsweise Triallylcyanurat und/oder Triallylisocyanurat enthalten, wobei das Co-Vernetzungsmittel in einer Menge von 0,05 bis 5 Gew.-%, bezogen auf die Menge des Polyolefins, zugeführt wird.

In einer bevorzugten Ausführungsform des erfindungsgemäßen Verfahrens wirkt das zweite Co-Vemetzungsmittel beschleunigend auf die peroxidische Vernetzungsreaktion. Besonders bevorzugt werden Dimethacrylate als erste Co-Vemetzungsmittel gegenüber beispielsweise TRIM verwendet, da hier eine größere Zugabemenge bei gleichem MFI erreicht werden kann, was vorteilhafterweise die Oberflächenenergie eines Bodenbelags auf Basis der erfindungsgemäßen Masse durch einen höheren Anteil an polaren Gruppen zur Folge hat.

In Schritt (c) des erfindungsgemäßen Verfahrens können auch übliche Füllstoffe, wie Quarzmehl, Kaolin, Talkum, Holzmehl, Dolomit, Aluminiumtrihydroxid, gefällte Kieselsäure, Schwerspat, Kreide, und übliche Pigmente zugeführt werden. Die Mengen der eingesetzten Füllstoffe und Pigmente liegen in den üblichen Bereichen und betragen beispielsweise bis 70% für Füllstoffe und beispielsweise bis 8% für Pigmente, bezogen auf die Gesamtformulierung.

Die Temperatur T1 in Schritt (a) des erfindungsgemäßen Verfahrens wird vorzugsweise so gewählt, dass das verwendete Polyolefin neben dem Compoundieren mit der ersten organischen Peroxidverbindung und dem Co-Vernetzungsmittel plastifiziert werden kann, aber noch kein temperaturbedingter Zerfall der ersten organischen Peroxidverbindung eintritt. Bei Verwendung von beispielsweise DHBP als erste organische Peroxidverbindung wird beispielsweise die Temperatur T1 ≤ 160°C, vorzugsweise zwischen etwa 120 bis 160°C, gehalten, d.h. unterhalb der Zersetzungstemperatur von DHBP. Bei dieser Temperatur kann eine ausreichende Plastifizierung des zu compoundierenden Gemisches erreicht werden.

Die Temperatur T2 in Schritt (b) des erfindungsgemäßen Verfahrens wird so gewählt, dass nach Zugabe des Mineralöls die Vernetzungsreaktion zwischen dem ersten organischen Peroxid und dem Co-Vernetzungsmittel einsetzt. Diese "Hauptreaktion" des gemäß Schritt (a) plastifizierten und compoundierten Gemisches wird bei Verwendung von beispielsweise DHBP bei etwa 180°C durchgeführt.

Die Temperatur T3 in Schritt (c) des erfindungsgemäßen Verfahren wird so gewählt, dass nach Zugabe der zweiten organischen Peroxidverbindung und des zweiten Co-Vernetzungsmittels die "Endvernetzung" sichergestellt wird, d.h. die eingesetzten ersten und zweiten Peroxidverbindungen sollen vorzugsweise vollständig während der Verweilzeit im Extruder umgesetzt werden. Bei Verwendung von beispielsweise 1,1-Di-(t-butylperoxy)-3,3,5-trimethylcyclohexan als zweite organische Peroxidverbindung ist die Temperatur T3 ≥ 185°C.

Die Temperaturführung der Schritte (a) bis (c) des erfindungsgemäßen Verfahrens kann durch externe und/oder interne Reaktionsgehäusetemperatureinrichtungen und/oder durch friktionseinleitende Schneckenelemente bei Verwendung von Doppelschneckenextruder geregelt bzw. eingestellt werden. Die Zeit zur Durchführung der Schritte (a) bis (c) des erfindungsgemäßen Verfahrens beträgt in der Regel 1 bis 4 Minuten. Beispielsweise hängt bei Verwendung eines Doppelschnekkenextruders die Verweilzeit von der Schneckenbestückung ab und wird so gewählt, dass in Abhängigkeit vom zu erzielenden Durchsatz das Gemisch entsprechend lange im Gehäuse bleibt, vorzugsweise etwa ein bis drei Minuten.

In einer bevorzugten Ausführungsform des erfindungsgemäßen Verfahrens wird nach Schritt (c) eine Entgasung der erhaltenen Masse, beispielsweise eine atmosphärische Entlüftung gefolgt von einer Vakuumentlüftung, durchgeführt.

Ein weiterer Gegenstand der vorliegenden Erfindung betrifft die Herstellung eines Bodenbelags unter Verwendung der vorstehend definierten formbaren Masse. In einer Ausführungsform umfasst das erfindungsgemäße Verfahren das Bereitstellen eines Trägers in Bahnenform und das Aufbringen der vorstehend definierten formbaren Masse auf eine Seite des Trägers. Als Träger kann jegliches, bisher im Bodenbelagsektor verwendetes Material auf Basis natürlicher und/oder synthetischer Gewebe oder Gewirke, textile Werkstoffe sowie auf Basis von Vlies bzw. Vliesstoffen verwendet werden. Beispielsweise können Jutegewebe, Mischgewebe aus natürlichen Fasern wie Baumwolle und Zellwolle, Glasfasergewebe, mit Haftvermittler beschichtetes Glasfasergewebe, Mischgewebe aus Synthesefasern, Gewebe aus Kern/Mantelfasern mit zum Beispiel einem Kern aus Polyester und einer Ummantelung aus Polyamid, eingesetzt werden.

In einer anderen Ausführungsform des erfindungsgemäßen Verfahrens zur Herstellung eines insbesondere homogenen Bodenbelags kann die beispielsweise in einem Doppelschneckenextruder erhaltene formbare Masse durch eine Breitschlitzdüse und Glättwerk oder durch ein Walzwerk zu einer Folie verarbeitet werden. Diese Folie kann beispielsweise mit einem anders dessinierten Granulat bestreut bzw. kontinuierlich durch eine Doppelbandauma oder Doppelbandpresse zu einem gewünschten Bodenbelag weiterverarbeitet werden.

In einer weiteren Ausführungsform können aus der formbaren Masse erhältliche Granulate bzw. daraus hergestelltes Mahlgut durch Aufstreuen auf einen Mitläufer in einer Thermofix®-Anlage zu einem Flächengebilde fixiert werden. Die Verdichtung und Glättung der so erhaltenen Warenbahn erfolgt in einer Auma. Die direkte Herstellung eines Bodenbelags durch Aufschüttung von Mahlgut bzw. Granulat ist auch in einer Doppelbandauma oder Doppelbandpresse möglich. Für die Herstellung homogener Bodenbeläge mit gerichteter Struktur können mehrfarbige Granulate oder Mischungen aus mehreren einfarbigen Granulaten in den Spalt eines Walzwerks/Kalanders gegeben werden.

Überraschenderweise hat sich bei dem Bodenbelag gezeigt, dass ohne Coronabehandlung eine Erhöhung der Oberflächenenergie erzielt werden kann, was. u.a. auf die Verwendung der Co-Vernetzer in den Schritten (a) und (c) des erfindungsgemäßen Verfahrens zurückzuführen ist Beispielsweise kann durch Einsatz von 1,3-BDMA und/oder 1,4-BDMA als erstes Co-Vernetzungsmittel in Schritt (a) des erfindungsgemäßen Verfahrens der Anteil an polaren Gruppen und somit die Oberflächenenergie gezielt erhöht werden. Aufgrund der höheren Oberflächenenergie weist der Bodenbelag eine "direkte Verklebbarkeit" im Vergleich mit herkömmlichen olefinischen Bodenbelägen auf. Ferner wird durch den zeitversetzten Zerfall der Peroxide in den Schritten (a) und (c) des erfindungsgemäßen Verfahrens und den damit verbundenen Vernetzungsreaktionen ein ("dreidimensionales") Netzwerk aufgebaut, das ausgezeichnete Materialeigenschaften des Bodenbelags zur Folge hat.

Die Figuren zeigen:

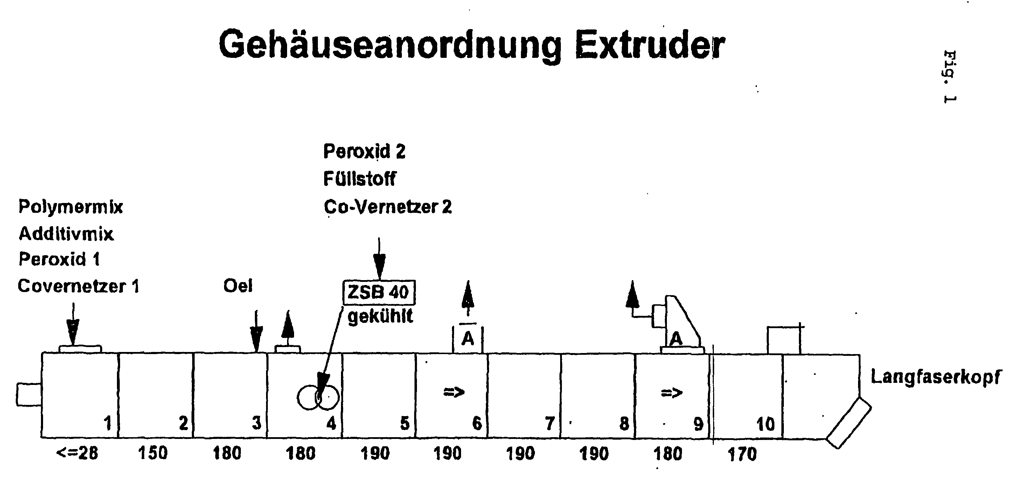

Figur 1 ist eine schematische Darstellung einer Vorrichtung zur Herstellung des Bodenbelags (vgl. auch Beispiel 1). Die Gehäuseanordnung des Extruders umfaßt zehn Gehäusezonen, wobei in der Gehäusezone 1 das Compoundgemisch gemäß Schritt (a), am Ende der Gehäusezone 3 das Mineralöl gemäß Schritt (b) und in der Gehäusezone 4 über einen Zweischneckenbeschickextruder (ZSB 40) bei einer Temperatur ≤ 28 °C das Gemisch gemäß Schritt (c) zugegeben werden. Am Anfang der Gehäusezone 4 ist eine rückwärtige Entlüftung, in der Gehäusezone 6 ist eine atmosphärische Entlüftung ("A") und in Gehäusezone 9 ist eine Vakuumentlüftung ("A") angeordnet. Unterhalb jeder Gehäusezone ist die jeweilige Gehäusetemperatur in °C angegeben.

Die vorliegende Erfindung wird durch die nachstehenden Beispiele näher erläutert.

### Beispiel 1

Als Vorrichtung zur Durchführung des erfindungsgemäßen Verfahrens wird ein dichtkämmender, gleichsinnig drehender Doppelschneckenextruder vom Typ ZSK 40 der Firma Coperion Werner + Pfleiderer mit L/D = 40 und D = 40 verwendet (vgl. Figur 1). Das Compoundgemisch (vgl. nachstehende Rezeptur für Schritt (a)) wird innerhalb einer 6D langen Einzugszone mittels geeigneter Förder- und Knetelemente, plastifiziert und homogenisiert. Die Temperatur beträgt hier etwa 160 °C. Nach der Zugabe des Mineralöls (SUNPAR 150®, 11,5 Gew.-%) erhöht sich die Temperatur durch die Friktions- und Scherkräfte der Schneckenelemente und initiiert die peroxidische Vernetzung im wesentlichen zwischen dem ersten organischen Peroxid DHBP und dem Co-Vemetzungsmittel 1,4-BDMA. Die Temperatur beträgt jetzt ca. 185 °C. Danach wird über einen Seitenextruder das Gemisch gemäß Schritt (c) in der nachstehenden Rezeptur zugegeben. Da die Temperatur der Masse über der Zersetzungstemperatur der zweiten organischen Peroxidverbindung liegt, wird nun die Endvemetzung initiiert. Die Temperatur beträgt hier ca. 195 °C. Vor dem Austritt aus dem Extruder wird eine Entgasung durch atmosphärische Entlüftung gefolgt von einer Vakuumentlüftung durchgeführt, um flüchtige Reaktionsprodukte sowie flüchtige Edukte zu entfernen, damit diese die spätere Raumluft nicht belasten können.

| Rezeptur für Beispiel 1 | | |
|---|---|---|
| Rohstoffe | Menge [g] | Anteil in Gesamtformulierung |
| Compoundgemisch, Schritt (a) | | |
| Affinity PL 1880 | 375,00 | 5,68% |
| Affinity VP 8770 | 2250,00 | 34,10% |
| Dow XU 60769.07 | 375,00 | 5,68% |
| | | |
| Verarbeitungshilfsmittel (Additivmix) | 59,4 | 0,9% |
| 1,4-BDMA | 5,30 | 0,080% |
| Trigonox 101-50 D-Pd | 6,60 | 0,100% |

| Mineralöl-Zugabe, Schritt (b) | | |
|---|---|---|
| SUNPAR 150 | 330,00 | 5,00% |

| Füllstoffgemisch (Seitenextruder), Schritt (c) | | |
|---|---|---|
| Füllstoff | 2904,00 | 44,02% |
| Trigonox 29-40 B-Pd | 21,10 | 0,320% |
| Perkalink 301-50 | 4,25 | 0,064% |
| Pigmentmischung | 267 | 4,05% |

Nachstehend sind die Eigenschaften des mit der vorstehenden Masse erfindungsgemäß hergestellten Bodenbelags aufgeführt:

| 1 Eindruckverhalten nach FN 433 | | |
|---|---|---|
| Resteindruck nach 150 min. | mm | 0,01 |
| Dicke vor Belastung | mm | 2,34 |
| Eindringtiefe nach 150 min. | mm | 0,13 |
| Index nach 150 min. | HE | 5,6 |
| Elastizität nach 150 min. | % | 92,3 |

| 2. Shorehärte nach DIN 53 505 | | |
|---|---|---|
| | Shore A | 96 |
| | Shore D | 45 |

| 3. Abriebverhalten nach DIN 53 516 | | |
|---|---|---|
| Rohdichte, EN 436 | g/cm³ | 1,335 |
| Volumenverlust | mm³ | 94,5 |

### Oberflächenenergie des erfindungsgemäß hergestellten Bodenbelags

### Untersuchungsmethode

Bestimmung der Oberflächenenergie der Proben durch Kontaktwinkeimessung. Als Testflüssigkeiten wurden Diiodmethan (Busscher) und Wasser (Busscher) verwendet. Die Auswertung erfolgte nach Owens, Wendt, Rabel & Kaelble.

### Untersuchungsergebnis

| Probe | Oberflächenenergie [mN/m] | Disperser Anteil [mN/m] | polarer Anteil [mN/m] |
|---|---|---|---|
| Elastomerfliese | 36,5 | 34,6 | 1,9 |

## Patentansprüche

1. Verfahren zur Herstellung einer formbaren Masse, umfassend die Schritte:
(a) Compoundieren eines Gemisches, welches mindestens ein Polyolefin mit einer Dichte < 0,918 g/cm³, eine erste organische Peroxidverbindung mit einer Zersetzungstemperatur T1 und ein erstes, bei einer Temperatur < T1 im wesentlichen stabiles Co-Vernetzungsmittel enthält,
(b) Zuführen von Mineralöl zu dem compoundierten Gemisch von Schritt (a) und Erwärmen dieses Gemisches auf eine Temperatur T2, und
(c) Zuführen von mindestens einer zweiten organischen Peroxidverbindung mit einer Zersetzungstemperatur T3 und einem zweiten, bei einer Temperatur < T3 im wesentlichen stabilen Co-Vernetzungsmittel zum Gemisch von Schritt (b) und Erwärmen des resultierenden Gemisches auf eine Temperatur ≥ T3 unter Erhalt der formbaren Masse,
wobei T1 < T2 < T3 ist.

2. Verfahren nach Anspruch 1, wobei das Polyolefin PE-VLD ist oder ein Copolymer aus Ethylen mit mindestens einem weiteren Olefin ist oder ein Gemisch von mindestens zwei Ethylen-Copolymersorten ist, und gegebenenfalls neben dem Polyolefin als weitere Komponente mindestens ein Pfropfpolymer vorliegt.

3. Verfahren nach Anspruch 1 oder 2, wobei das Polyolefin eine Dichte von 0,86 bis 0,91 g/cm³ aufweist.

4. Verfahren nach einem der Ansprüche 1 bis 3, wobei die erste Peroxidverbindung DHBP ist.

5. Verfahren nach einem der Ansprüche 1 bis 4, wobei die erste Peroxidverbindung in einer Menge von 0,05 bis 2,0 Gew.-%, bezogen auf die Menge des Polyolefins, vorliegt.

6. Verfahren nach einem der Ansprüche 1 bis 5, wobei das erste Co-Vernetzungsmittel ein oder mehrere Di- und/oder Trimethacrylate enthält.

7. Verfahren nach Anspruch 6, wobei die Di- und Trimethylacrylate aus der Gruppe 1,4-BDMA, 1,3-BDMA, TEDMA und TRIM ausgewählt sind.

8. Verfahren nach einem der Ansprüche 1 bis 7, wobei das erste Co-Vernetzungsmittel in einer Menge von 0,05 bis 4,0 Gew.-%, bezogen auf die Menge des Polyolefins, vorliegt.

9. Verfahren nach einem der Ansprüche 1 bis 8, wobei das Gemisch in Schritt (a) ein oder mehrere Verarbeitungshilfsmittel enthält.

10. Verfahren nach einem der Ansprüche 1 bis 9, wobei das Mineralöl in einer Menge von 2 bis 25 Gew.-%, bezogen auf die Menge des Polyolefins, zugeführt wird.

11. Verfahren nach einem der Ansprüche 1 bis 10, wobei die zweite Peroxidverbindung 1,1-Di-(t-butylperoxy)-3,3,5-trimethylcyclohexan ist.

12. Verfahren nach einem der Ansprüche 1 bis 11, wobei die zweite Peroxidverbindung in einer Menge von 0,05 bis 2,0 Gew.-%, bezogen auf die Menge des Polyolefins, zugeführt wird.

13. Verfahren nach einem der Ansprüche 1 bis 12; wobei das zweite Co-Vernetzungsmittel TAC und/oder TAIC enthält.

14. Verfahren nach einem der Ansprüche 1 bis 13, wobei das zweite Co-Vernetzungsmittel in einer Menge von 0,05 bis 5,0 Gew.-%, bezogen auf die Menge des Polyolefins, zugeführt wird.

15. Verfahren nach einem der Ansprüche 1 bis 14, wobei in Schritt (c) ein oder mehrere Füllstoffe und/oder ein oder mehrere Pigmente zugeführt werden.

16. Verfahren nach einem der Ansprüche 1 bis 15, worin die Temperatur T1 etwa ≤ 160°C ist, die Temperatur T2 etwa 180°C ist und die Temperatur T3 ≥ 185°C ist.

17. Verfahren nach einem der Ansprüche 1 bis 16, worin die Zeit zur Durchführung der Schritte (a) bis (c) etwa 1 bis 3 Minuten beträgt.

18. Verfahren nach einem der Ansprüche 1 bis 17, worin nach Schritt (c) eine Entgasung durchgeführt wird.

19. Verfahren nach einem der Ansprüche 1 bis 18, worin die in einer geeigneten Vorrichtung nach einem der Ansprüche 1 bis 18 erhaltene Formmasse flächig ausgebildet wird.

## Claims

1. A method for the production of a moldable mass, comprising the following steps:
(a) Compounding of a blend that contains at least one polyolefin with a density of < 0.918 g/cm³, a first organic peroxide compound with a decomposition temperature T1, and a first co-cross-linking agent, which is essentially stable at a temperature of < T1,
(b) Adding of mineral oil to the compounded blend of step (a), and heating of this blend to a temperature of T2, and
(c) Adding of at least one second organic peroxide compound with a decomposition temperature T3, and a second co-cross-linking agent, which is essentially stable at a temperature of < T3, to the blend of step (b), and heating of the resulting blend to a temperature of ≥ T3 while yielding the moldable mass,
whereby T 1 < T2 < T3.

2. The method according to claim 1, whereby the polyolefin is either PE-VLD, or a copolymer of ethylene with at least one additional olefin, or a blend of at least two ethylene copolymer types, and, optionally, at least one graft polymer is present as an additional component in addition to the polyolefin.

3. The method according to claims 1 or 2, whereby the polyolefin has a density of 0.86 to 0.91 g/cm³.

4. The method according to one of the claims 1 to 3, whereby the first peroxide compound is DHBP.

5. The method according to one of the claims 1 to 4, whereby the first peroxide compound is present at a quantity of 0.05 to 2.0 weight-percent based on the amount of the polyolefin.

6. The method according to one of the claims 1 to 5, whereby the first co-cross-linking agent contains one or more di- and/or trimethacrylates.

7. The method according to claim 6, whereby the di- and trimethylacrylates are selected from the group 1,4-BDMA, 1,3-BDMA, TEDMA, and TRIM.

8. The method according to one of the claims 1 to 7, whereby the first co-cross-linking agent is present at a quantity of 0.05 to 4.0 weight-percent based on the amount of the polyolefin.

9. The method according to one of the claims 1 to 8, whereby the blend in step (a) contains one or more processing auxiliary agents.

10. The method according to one of the claims 1 to 9, whereby the mineral oil is added at a quantity of 2 to 25 weight-percent based on the amount of the polyolefin.

11. The method according to one of the claims 1 to 10, whereby the second peroxide compound is 1,1-di-(t-butylperoxy)-3,3,5-trimethylcyclohexane.

12. The method according to one of the claims 1 to 11, whereby the second peroxide compound is added at a quantity of 0.05 to 2.0 weight-percent based on the amount of the polyolefin.

13. The method according to one of the claims 1 to 12, whereby the second co-cross-linking agent contains TAC and/or TAIC.

14. The method according to one of the claims 1 to 13, whereby the second co-cross-linking agent is added at a quantity of 0.05 to 5.0 weight-percent based on the amount of the polyolefin.

15. The method according to one of the claims 1 to 14, whereby in step (c) one or more fillers, and/or one or more pigments are added.

16. The method according to one of the claims 1 to 15, in which the temperature T1 is approximately ≤ 160°C, the temperature T2 is approximately 180°C, and the temperature T3 is ≥ 185°C.

17. The method according to one of the claims 1 to 16, in which the time for performing steps (a) to (c) is approximately 1 to 3 minutes.

18. The method according to one of the claims 1 to 17, in which degassing is performed after step (c).

19. The method according to one of the claims 1 to 18, in which the molded mass achieved in a suitable device according to one of the claims 1 to 18 is embodied two-dimensionally.

## Revendications

1. Procédé de fabrication d'une matière moulable, comprenant les étapes, consistant à :
(a) composer un mélange, qui contient au moins une polyoléfine, d'une densité inférieure à 0,918 g/cm³, une première combinaison de peroxydes organique avec une température de décomposition T1 et un premier co-agent de réticulation, essentiellement stable à une température inférieure à T1,
(b) amener de l'huile minérale au mélange composé de l'étape (a) et chauffer ce mélange à une température T2 et
(c) amener au moins une deuxième combinaison de peroxydes organique avec une température de décomposition T3 et un deuxième co-agent de réticulation, essentiellement stable, à une température inférieure à T3, au mélange de l'étape (b) et chauffer le mélange résultant à une température ≥ T3, tout en conservant la matière moulable,
moyennant quoi T1 < T2 < T3.

2. Procédé selon la revendication 1, la polyoléfine étant un polyéthylène à très faible densité ou étant un copolymère à base d'éthylène, avec au moins une autre oléfine ou étant un mélange d'au moins deux sortes de copolymères à base d'éthylène et un polymère greffé étant présent, le cas échéant, en tant qu'autre composant, en plus de la polyoléfine.

3. Procédé selon la revendication 1 ou 2, la polyoléfine présentant une densité de 0,86 à 0,91 g/cm³.

4. Procédé selon l'une des revendications 1 à 3, la première combinaison de peroxydes étant du DHBP.

5. Procédé selon l'une des revendications 1 à 4, la première combinaison de peroxydes étant présente en une quantité de 0,05 à 2,0 % en poids, par rapport à la quantité de la polyoléfine.

6. Procédé selon l'une des revendications 1 à 5, le premier co-agent de réticulation contenant un ou plusieurs di et / ou trimétacrylates.

7. Procédé selon la revendication 6, les di et triméthylacrylates étant sélectionnés parmi les éléments du groupe 1,4-BDMA, 1,3-BDMA, TEDMA et TRIM.

8. Procédé selon l'une des revendications 1 à 7, le premier co-agent de réticulation étant présent en une quantité de 0,05 à 4,0 % en poids, par rapport à la quantité de la polyoléfine.

9. Procédé selon l'une des revendications 1 à 8, le mélange de l'étape (a) contenant un ou plusieurs produits auxiliaires.

10. Procédé selon l'une des revendications 1 à 9, l'huile minérale étant amenée en une quantité de 2 à 25 % en poids, par rapport à la quantité de la polyoléfine.

11. Procédé selon l'une des revendications 1 à 10, la deuxième combinaison de peroxydes étant du 1,1-Di(t-butylperoxy)-3,3,5-triméthylcyclohexane.

12. Procédé selon l'une des revendications 1 à 11, la deuxième combinaison de peroxydes étant amenée en une quantité de 0,05 à 2,0 % en poids, par rapport à la quantité de la polyoléfine.

13. Procédé selon l'une des revendications 1 à 12, le deuxième co-agent de réticulation contenant du TAC et / ou du TAIC.

14. Procédé selon l'une des revendications 1 à 13, le deuxième co-agent de réticulation étant amené en une quantité de 0,05 à 5,0 % en poids, par rapport à la quantité de la polyoléfine.

15. Procédé selon l'une des revendications 1 à 14, une ou plusieurs matières de charge et /ou un ou plusieurs pigments étant amenés à l'étape (c).

16. Procédé selon l'une des revendications 1 à 15, dans lequel la température T1 est approximativement ≤ 160° C, la température T2 est approximativement de 180° C et la température T3 est ≥ 185° C.

17. Procédé selon l'une des revendications 1 à 16, dans lequel le temps d'exécution des étapes (a) à (c) est approximativement de 1 à 3 minutes.

18. Procédé selon l'une des revendications 1 à 17, dans lequel une extraction de gaz est effectuée après l'étape (c).

19. Procédé selon l'une des revendications 1 à 18, dans lequel la matière à mouler, obtenue dans un dispositif approprié selon l'une des revendications 1 à 18, est constituée en nappe.
